# EUROPEAN PATENT SPECIFICATION

(11) **EP 3 653 461 B1**
(45) Date of publication and mention of the grant of the patent: **06.03.2024**
(21) Application number: 18206481.6
(22) Date of filing: 15.11.2018
(51) Int. Cl.: B60W 50/00, B60W 50/14, B60W 50/16

(54) **A METHOD FOR OPTIMIZING ENERGY CONSUMPTION OF A TRANSPORTATION MEANS, HUMAN MACHINE INTERFACE AND TRANSPORTATION MEANS**
VERFAHREN ZUR OPTIMIERUNG DES ENERGIEVERBRAUCHS EINES TRANSPORTMITTELS, MASCHINENSCHNITTSTELLE UND TRANSPORTMITTEL
PROCÉDÉ POUR OPTIMISER LA CONSOMMATION D'ÉNERGIE D'UN MOYEN DE TRANSPORT, INTERFACE HOMME-MACHINE ET MOYEN DE TRANSPORT

(43) Date of publication of application: 20.05.2020
(73) Proprietor: Bayerische Motoren Werke Aktiengesellschaft, 80809 München (DE)
(72) Inventor: Krzywicki, Matt, Shohola, PA 18458 (US)

(56) References cited:
- EP-A1- 3 015 333
- US-A1- 2014 277 835
- US-A1- 2015 239 454
- US-A1- 2018 265 092

## Description

The present invention relates to a method for optimizing energy consumption of a transportation means, a human machine interface and a transportation means.

Currently, many automobile manufacturers provide a so-called "eco mode" for the operation of a vehicle which is in particular a fuel saving mode. Usually, the optimization concerning energy consumption depends on engine characteristics of the specific vehicle. However, road conditions are not considered in an optimization of energy consumption in an eco mode.

US 2013/01501046 A1 discloses an eco driving system for a vehicle which suggests candidate routes for an optimized energy consumption prior to the beginning of the ride. However, candidates are usually calculated prior to the start of the ride and the operation of the vehicle during the ride is not considered.

US 2015/0239454 A1 discloses a route-vehicle road load management and/or operator notification thereof, according to which traffic conditions are estimated and an indication as to a throttle increase/decrease is displayed to the driver.

US 2014/0277835 A1 discloses a route navigation with optimal speed profile, wherein road conditions and speed limits are considered in addition to a current route estimated by a navigation system in order to create a speed profile for a vehicle.

Furthermore, cruise control systems for trucks constitute state of the art, wherein a route topology, e.g. a downhill gradient, is considered for optimizing fuel consumption (cf. https:/www.daimler.com/innovation/efficiency/intelligent-driving.html). However, the cruise control system only applies to autonomous operation modes of vehicles. Therefore, this concept does not apply to human-controlled vehicles. Since it cannot be expected that autonomous driving will be commercialized within the next several years, a need for an optimized energy consumption operation mode for human-controlled vehicles still remains.

Therefore, it is an object of the present invention to provide an optimization of energy consumption for human-controlled transportation means which overcomes the afore-mentioned disadvantages.

The problem is solved by the technical features of the independent claims of the present invention. According to a first aspect, the present invention relates to a method for optimizing energy consumption of a transportation means. "Transportation means" can in particular include cars and/or trucks and/or motorbikes and/or busses. The term "optimizing energy consumption" can in particular refer to fuel saving and/or to a method of charging a battery, in particular a traction battery, of a transportation means. Thus, it is to be understood that the term "optimization of energy consumption" refers especially to a compromise between time needed to pass a route with the least possible fuel consumption and/or with the most possible charging of battery. The inventive method comprises a step of receiving data associated with the road topology of an upcoming route. The term "road topology" especially relates to the specific geographical road conditions, e. g. slopes and/or curves. The data can in particular comprise 3D coordinates of a GPS data and/or a curvature information and a slope information and/or a surface condition with respect to the road. The inventive method comprises determining an optimized driving pattern with regard to energy consumption of the transportation means depending on the data. This can for example be achieved by a processing unit, e.g. a CPU and/or a micro controller. The optimized driving pattern can be determined by methods known in the art. Furthermore the data and the determination can also consider a real time traffic information data. Furthermore, the inventive method comprises the step of outputting a recommendation of a driving behavior with respect to the transportation means to a user, in particular the driver, wherein the recommendation of the driving behavior comprises the optimized driving pattern for a predetermined segment of the upcoming route in real time. In other words, the user receives the recommendation by the transportation vehicle of how to comply with the determined optimized driving behavior. The recommendation the user receives is concerned with the predetermined segment, e.g. a slope of the upcoming route. In particular, the recommendation can comprise a graphical indicator of how many percent of a maximum range a gas pedal has to be depressed, in order to comply with the recommended driving behavior. Furthermore, the recommendation is output in real time. This means that the user frequently gets updated for each of the predetermined segments of how to adapt his driving behavior and/or of how to comply with the optimized driving pattern determined by the transportation means with regard to optimized energy consumption. Therefore, an efficient and user-friendly method for optimizing energy consumption can be provided for human-controlled vehicles which overcomes the disadvantages discussed in the introductory part. Updating the user by the output of a recommendation in real time with respect to be predetermined segments of e. g. road topology helps the user to easily operate the car in order to save energy.

The dependent claims include advantageous variants of the present invention.

According to an advantageous variant, the method of the present invention comprises outputting the recommendation as an acoustic and/or haptic and/or visual output. An acoustic recommendation can comprise a tone in a confirming and/or non-confirming manner depending on the deviation of the user's driving behavior from the recommended driving behavior. Furthermore, the recommendation can comprise vocal instructions like, e.g. "brake softly" and/or "increase the pressure on the gas pedal" and/or "hold the gas pedal in its current position". A haptic recommendation can comprise e. g. a vibration of the seat and/or a steering wheel vibration and/or a vibration of a pedal, e. g. a gas pedal and/or a brake pedal. For example a vibration can start, if the user increasingly deviates from the recommendation. If the user for example increasingly complies with the recommended driving behavior, the vibration can increase or decrease. Furthermore, the visual output can comprise outputting a recommendation on a display. For example a gas pedal position can be graphically displayed indicating to the user how much he has to push and/or release the gas pedal in order to comply with a recommended position. In this manner, an intuitively comprehensible output of the recommendation can be provided to the user by the method of the present invention.

According to a further advantageous variant of the present invention, the recommendation comprises an indicator on a gauge. The gauge could for example be a speed gauge and/or gauge indicating a rotational frequency of the engine. Furthermore, a gauge can also display a power indication bar disclosing to the user a percentage of a present position of a gas and/or a brake pedal with respect to a maximum range of a brake and/or a gas pedal. An indication of the recommendation of a driving behavior can for example comprise a needle displayed over and/or under a power indicator bar which recommends a level of how much a gas pedal and/or a brake pedal has to be depressed. Thus, the user can receive information of how to operate the transportation means for optimizing its energy consumption.

According to an advantageous variant of the inventive method, the data is further associated with the real time traffic information data. Real time traffic information data can be related to a frequency of traffic and/or a delay of traffic and/or a construction site delaying traffic. Therefore, the data for determining an optimized driving pattern includes a route topology but in particular also a real time traffic information. Therefore, the optimization for energy consumption and their according recommendation of the driving behavior is output based on real time traffic information data and an upcoming route topology data. Therefore, further important factors influencing the optimization of energy consumption concerning the environment of the transportation means can be advantageously considered for the optimization of fuel consumption and the recommendation.

The recommendation comprises a steering angle and/or a brake intensity.

According to further advantageous variants of the method of the present invention, the data associated to the road topology and/or real time traffic information is received from another transportation means and/or by a wireless network and/or by a cloud server. Therefore, a transportation means frequently driving the road or driving ahead of the ego transportation means of the inventive method can collect data and send it by a car to car communication to the ego transportation means. In addition, the transportation means of the present invention can be capable performing training methods which are related to a neural network. Therefore, the determination of an optimized driving behavior can be learned by the transportation means by for example frequently driving a specific route in which a road topology does not change. The method of the present invention furthermore comprises the step of at least partly restricting a driving behavior in accordance to the recommendation. The car can for example request a take over of specific assistance functions by the user who can confirm the takeover request presented by the transportation means. Therefore, the inventive method can also be applied to readily known driving assistant systems. However, the present method in particular does not include a complete automatization in accordance to the recommendation.

According to an advantageous variant of the present invention, the predetermined segment can be related to a slope and/or a peak and/or a tribological property of an upcoming road. The upcoming route can be in particular partitioned in predetermined segments, wherein each segment is for example related to a specific road condition like for example a slope and/or a peak. A tribological property of the road can be for example an icy road and/or a snowy road and/or a wet road and/or any other type of road texture leading to different tribological properties. The tribological properties relating to the road can be for example determined by a LiDAR sensor and/or an ultrasonic sensor and/or a radar sensor and/or a camera sensor by known methods. Due to the segmentation of the route, the route can be in particular characterized wherein each segment can be related to a different type of optimized driving pattern in order to optimize the fuel consumption. Therefore, the environmental conditions relating to a topology of the road can be fully considered for energy saving.

In accordance to another advantageous variant of the inventive method, the optimized driving pattern can be related to fuel saving and/or charging a battery, in particular a traction battery. Therefore, the present method is not only related to a reduction of the fuel consumption but also to a re-usage of the energy, like for example energy which results from braking to charge a battery, i.e. to transform energy for re-using it at least partly, e.g. by recuperation.

In a further advantageous variant of the present invention, the inventive method further comprises the steps of determining a deviation in a user's mode of operation from the recommendation and based thereon outputting a refined recommendation depending on the deviation. For example, a deviation can comprise a shifting which is not recommended by the transportation means. Since another gear has been shifted to, for example a pushing behavior of the gas pedal is not the same as recommended in a prior gear. Therefore, the recommendation is refined independent of the shifting. Thus, the method according to the present invention also allows an easy refinement of the recommendation in order to optimize energy consumption, even if the driving behavior of the user differs from the recommendation and therefore, the recommendation is flexibly reacting to the deviation.

The following inventive aspects comprise advantageous variants with the above discussed features and the general advantages of the inventive method respectively.

The second aspect of the present invention relates to a human machine interface which is capable of performing the method according to the first aspect. The human machine interface can have an input device capable of acquiring an optimized driving pattern and a processing unit, e. g. a CPU and/or a micro controller and/or an electronic control unit, which is capable of calculating a recommendation of a driving behavior. Furthermore, the human machine interface in particular comprises an output device, e. g. a display, which is capable of outputting a recommendation of a driving behavior with respect to the transportation means to a user for a predetermined segment of the upcoming route in real time.

According to a third aspect the present invention relates to a transportation means comprising a human machine interface according to the second aspect.

These and further details, advantages and features of the present invention will be described based on variants of the present invention and by taking reference to the accompanying figures.
- Fig. 1: shows a schematic block diagram according to a variant of the inventive method.
- Fig. 2: shows a variant of an inventive human machine interface.
- Fig. 3: shows a variant of an inventive transportation means.
- Fig. 4: shows a diagram of a refinement method of the inventive recommendation.

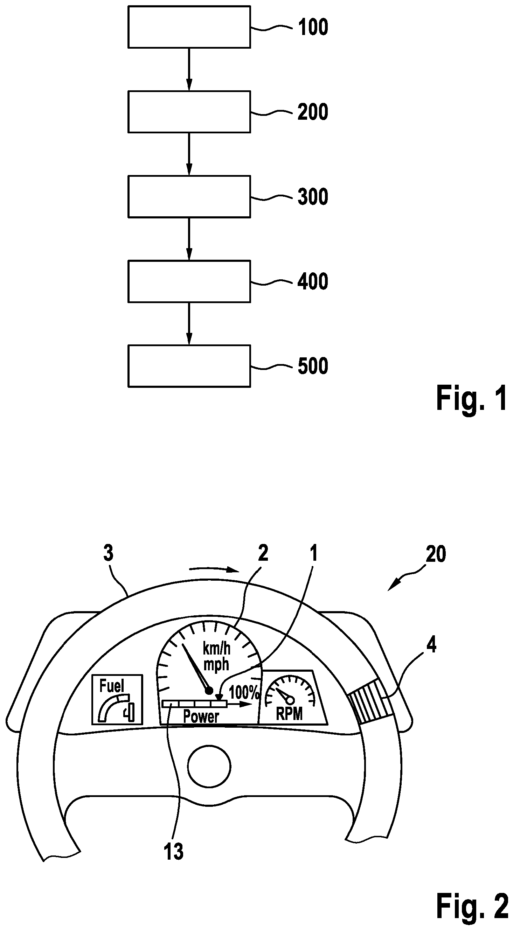

Fig. 1 shows an illustration of a variant of the inventive method. In a first step 100, data associated with the road topology with respect to curves, slopes, peaks, a tribological property and real time traffic information data concerning a construction site on the route is received by the transportation means 30. In a second step 200, an optimized driving pattern with regard to a fuel saving of the transportation means 30 is determined depending on the data for predetermined segments of a route. In a third step 300, a recommendation 14 of a driving behavior with respect to the transportation means 30 is output to user 5, wherein the recommendation 14 of the driving behavior complies with the optimized driving pattern for a predetermined segment wherein the predetermined segment is related to an uphill slope. In particular recommendation 14 is concerned with a level percentage of pushing the gas pedal to overcome the slope, wherein the level percentage relates to a half range of the gas pedal. In a fourth step 400, however, a deviation in a user's mode of operation from the recommendation 14 is determined. In particular, the deviation is a shifting into a higher gear by the user 5. In a fifth step 500 a refined recommendation 14 with regard to the higher gear is output depending on the deviation. Due to the shifting in a higher gear, the user 5 must push the gas pedal to a higher percentage level which can for example comprise 60%.

Fig. 2 shows a human machine interface 20 with respect to an interior of a transportation means 30. A gauge 2 comprises a power indicator 13, wherein the power indicator 13 is related to a percentage of a maximum range of which the gas pedal can be pushed. The needle 1 is a recommendation 14 with regard to an optimized driving pattern output to the user 5. Thus, if the user 5 adjusts the position of the gas pedal so that the power indicator 13 and the needle 1 match their graphical position, an optimized driving pattern which is in compliance with optimized fuel consumption can be obtained Furthermore, the steering wheel 3 comprises an indicator for steering 4. This can in particular relate to a curve of the road, wherein the indicator for steering is a light projected on the steering wheel 13, wherein the light indicates an optimized steering angle as a recommendation.

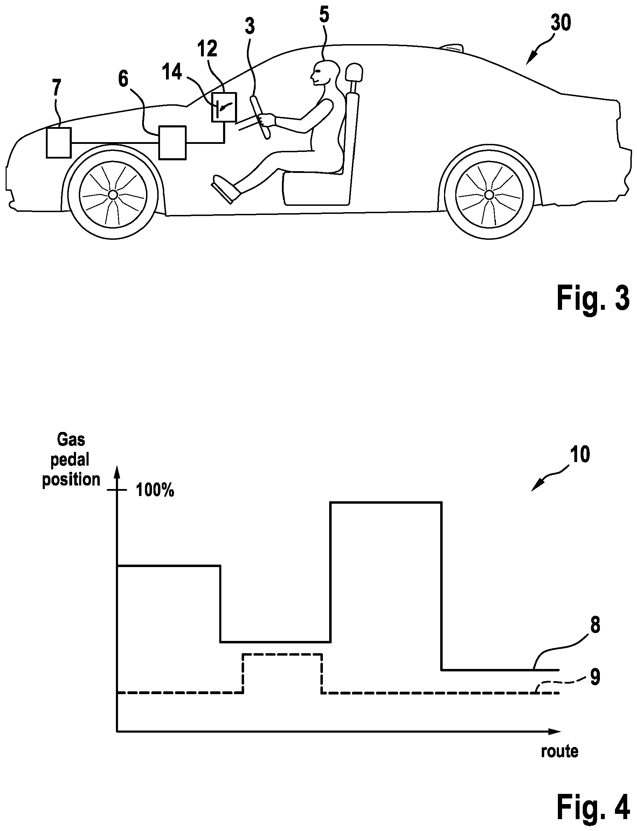

Fig. 3 shows a variant of an inventive transportation means 30 in form of a car. The user 5 sits in the transportation means 30 at the steering wheel 3. The transportation means 30 comprises a display unit 12 displaying for example a recommendation 14 for the user 5 in compliance with an optimized driving pattern. The transportation means 30 comprises an input device 7 generating the optimized driving pattern and communicating data related to the optimized driving pattern to a processing unit 6. The processing unit 6 prompts the display unit 12, e. g. a display gauge 2, to show a recommendation 14 to the user 5.

Fig. 4 shows a diagram 10 comprising a first graph 8 and a second graph 9. The ordinate indicates to the percentage of the gas pedal position, wherein 100% is a full range gas pedal position. The abscissa indicates the route distance, wherein the topology can change during the route. Diagram 10 indicates a first graph 8 of a recommendation 14 changing with the topolology of the route. Second graph 9 is a refined recommendation 14, in case the user 5 shifts and decreases a gear. Thus, the output of the recommendation 14 can be refined to the particular driving behavior of the user 5.

### List of reference signs

- 1: needle
- 2: gauge
- 3: steering wheel
- 4: indicator for steering
- 5: user
- 6: processing unit
- 7: device
- 8: first graph
- 9: second graph
- 10: diagram
- 12: display unit
- 13: power indicator
- 14: recommendation
- 20: human machine interface
- 30: transportation means
- 100: first step
- 200: second step
- 300: third step
- 400: fourth step
- 500: fifth step

## Claims

1. A method for optimizing energy consumption of a transportation means (30) comprising the steps of:
• receiving data (100) associated with a road topology of an upcoming route,
• determining (200) an optimized driving pattern with regard to energy consumption of the transportation means (30) depending on the data and
• outputting (300) a recommendation (14) of a driving behavior with respect to the transportation means (30) to a user (5), wherein the recommendation (14) of the driving behavior complies with the optimized driving pattern for a predetermined segment of the upcoming route in real time, **characterized in that** the recommendation (14) comprises
• a steering angle and/or
• a brake intensity.

2. The method according to claim 1, wherein outputting the recommendation (14) comprises an acoustic and/or a haptic and/or a visual output.

3. The method according to claim 2, wherein the recommendation (14) comprises an indicator on a gauge (2).

4. The method according to any of the preceding claims, wherein the data is further associated with a real time traffic information.

5. The method according to any of the preceding claims, wherein the recommendation (14) comprises a shifting behavior.

6. The method according to any of the preceding claims, wherein the data associated with the road topology is received from another transportation means and/or by a wireless network and/or by a cloud server.

7. The method according to any of the preceding claims further comprising the step of at least partly restricting the driving behavior in accordance to the recommendation (14).

8. The method according to any of the preceding claims, wherein the predetermined segment relates to a curve and/or a slope and/or a peak and/or a tribological property of the upcoming route.

9. The method according to any of the preceding claims, wherein the optimized driving pattern is related to a fuel save mode and/or to a charge of a battery.

10. The method according to any of the preceding claims further comprising the steps of
• determining (400) a deviation in a user's mode of operation from the recommendation (14) and based thereon
• outputting (500) a refined recommendation depending on the deviation.

11. A human machine interface (20) configured to perform the method according to claims 1 to 10.

12. A transportation means (30) comprising a human machine interface (20) of claim 11.

## Patentansprüche

1. Verfahren zum Optimieren eines Energieverbrauchs eines Transportmittels (30), das die folgenden Schritte umfasst:
• Empfangen von Daten (100), die mit einer Straßentopologie einer bevorstehenden Route verknüpft sind,
• Bestimmen (200) eines optimierten Fahrmusters mit Bezug auf einen Energieverbrauch des Transportmittels (30) in Abhängigkeit von den Daten und
• Ausgeben (300) einer Empfehlung (14) eines Fahrverhaltens mit Bezug auf das Transportmittel (30) für einen Benutzer (5), wobei die Empfehlung (14) des Fahrverhaltens für ein vorbestimmtes Segment der bevorstehenden Route in Echtzeit mit dem optimierten Fahrmuster konform ist, **dadurch gekennzeichnet, dass** die Empfehlung (14) Folgendes umfasst
• einen Lenkwinkel und/oder
• eine Bremsintensität.

2. Verfahren nach Anspruch 1, wobei das Ausgeben der Empfehlung (14) eine akustische und/oder eine haptische und/oder eine visuelle Ausgabe umfasst.

3. Verfahren nach Anspruch 2, wobei die Empfehlung (14) eine Anzeige auf einem Messinstrument (2) umfasst.

4. Verfahren nach einem der vorhergehenden Ansprüche, wobei die Daten ferner mit Echtzeitverkehrsinformationen verknüpft sind.

5. Verfahren nach einem der vorhergehenden Ansprüche, wobei die Empfehlung (14) ein Schaltverhalten umfasst.

6. Verfahren nach einem der vorhergehenden Ansprüche, wobei die mit der Straßentopologie verknüpften Daten von einem anderen Transportmittel und/oder von einem drahtlosen Netzwerk und/oder von einem Cloudserver empfangen werden.

7. Verfahren nach einem der vorhergehenden Ansprüche, das ferner den Schritt des mindestens teilweisen Einschränkens des Fahrverhaltens gemäß der Empfehlung (14) umfasst.

8. Verfahren nach einem der vorhergehenden Ansprüche, wobei das vorbestimmte Segment eine Kurve und/oder eine Schräge und/oder eine Spitze und/oder eine tribologische Eigenschaft der bevorstehenden Route betrifft.

9. Verfahren nach einem der vorhergehenden Ansprüche, wobei das optimierte Fahrmuster einen Kraftstoffsparmodus und/oder eine Ladung einer Batterie betrifft.

10. Verfahren nach einem der vorhergehenden Ansprüche, das ferner die folgenden Schritte umfasst
• Bestimmen (400) einer Abweichung eines Betriebsmodus eines Benutzers von der Empfehlung (14) und darauf basierend
• Ausgeben (500) einer verfeinerten Empfehlung in Abhängigkeit von der Abweichung.

11. Mensch-Maschine-Schnittstelle (20), die dazu ausgelegt ist, das Verfahren nach den Ansprüchen 1 bis 10 durchzuführen.

12. Transportmittel (30), das eine Mensch-Maschine-Schnittstelle (20) von Anspruch 11 umfasst.

## Revendications

1. Procédé d'optimisation de la consommation d'énergie d'un moyen de transport (30), comprenant les étapes suivantes :
• réception de données (100) associées à une topologie routière d'un itinéraire à venir,
• détermination (200) d'un schéma de conduite optimisé au regard de la consommation d'énergie du moyen de transport (30) en fonction des données, et
• fourniture (300), à un utilisateur (5), d'une recommandation (14) d'un comportement de conduite par rapport au moyen de transport (30), la recommandation (14) du comportement de conduite se conformant au schéma de conduite optimisé pour un segment prédéterminé de l'itinéraire à venir en temps réel, **caractérisé en ce que** la recommandation (14) comprend
• un angle de braquage et/ou
• une intensité de freinage.

2. Procédé selon la revendication 1, la fourniture de la recommandation (14) comprenant une sortie acoustique et/ou une sortie haptique et/ou une sortie visuelle.

3. Procédé selon la revendication 2, la recommandation (14) comprenant un indicateur sur un instrument de mesure (2) .

4. Procédé selon l'une quelconque des revendications précédentes, les données étant en outre associées à une information sur la circulation en temps réel.

5. Procédé selon l'une quelconque des revendications précédentes, la recommandation (14) comprenant un comportement de passage de rapport.

6. Procédé selon l'une quelconque des revendications précédentes, les données associées à la topologie routière étant reçues depuis un autre moyen de transport et/ou par un réseau sans fil et/ou par un serveur du cloud.

7. Procédé selon l'une quelconque des revendications précédentes, comprenant en outre l'étape de limitation au moins partielle du comportement de conduite conformément à la recommandation (14).

8. Procédé selon l'une quelconque des revendications précédentes, le segment prédéterminé étant relatif à une courbe et/ou une pente et/ou un point culminant et/ou une propriété tribologique de l'itinéraire à venir.

9. Procédé selon l'une quelconque des revendications précédentes, le schéma de conduite optimisé étant relatif à un mode d'économie de carburant et/ou à une charge d'une batterie.

10. Procédé selon l'une quelconque des revendications précédentes, comprenant en outre les étapes suivantes :
• détermination (400) d'un écart dans un mode d'utilisation par un utilisateur par rapport à la recommandation (14) et, sur cette base,
• fourniture (500) d'une recommandation affinée en fonction de l'écart.

11. Interface homme-machine (20) configurée pour réaliser le procédé selon les revendications 1 à 10.

12. Moyen de transport (30) comprenant une interface homme-machine (20) de la revendication 11.
